# EUROPEAN PATENT APPLICATION

(11) **EP 4 693 653 A1**
(43) Date of publication of application: **11.02.2026**
(21) Application number: 23931665.6
(22) Date of filing: 31.05.2023
(51) Int. Cl.: H01M 50/227, H01M 50/244, H01M 50/249

(54) **BATTERY CELL TRAY, BATTERY MODULE, AND BATTERY PACK**

(30) Priority: 07.04.2023 CN 202320770897 U; 28.04.2023 CN 202321020882 U
(71) Applicant: Eve Energy Co., Ltd., Huizhou Guangdong 516000 (CN)
(72) Inventor: QIU, Wencong, Huizhou, Guangdong 516000 (CN); CHEN, Zhiwei, Huizhou, Guangdong 516000 (CN); CHEN, Chaohai, Huizhou, Guangdong 516000 (CN); JIANG, Jibing, Huizhou, Guangdong 516000 (CN)
(74) Representative: Berggren Oy
(86) International application number: PCT/CN2023/097598
(87) International publication number: WO 2024/207611

(57) **Abstract**

A cell tray, a battery module, and a battery pack are provided. The battery pack includes the battery module. The battery module includes cells and a cell tray. The cell tray includes a tray body and a reinforcement part provided on the tray body. The tray body is provided with a plurality of cell positioning members to fix positions of the cells. The reinforcement part is disposed in an offset manner with the plurality of cell positioning members. The tray body and the reinforcement part are both made of fully plastic materials.

## Description

This application is a continuation of International Application No. PCT/CN2023/097598, filed on May 31, 2023, which claims priorities to Chinese patent application NO. 202321020882.9 filed on April 28, 2023, and Chinese patent application NO. 202320770897.0 filed on April 7, 2023, the content of the above applications is incorporated herein by reference in its entirety.

### TECHNICAL FIELD

The present disclosure relates to the field of battery technology, in particular, to a cell tray, a battery module, and a battery pack.

### BACKGROUND

As an energy storage device, the battery is one of the most important parts of a vehicle. However, as a consumable part, the battery is usually fixed within the battery pack through a battery tray. With the rapid development of electric vehicles, their configurations are becoming increasingly advanced, leading to heavier batteries. Consequently, there is a growing trend towards lightweight design for the battery tray. Currently, most battery trays are manufactured by stamping metal sheets. While this method provides excellent support strength, it results in heavy trays having limited toughness and poor insulation performance. As a result, additional insulating films or spray-coated insulating layers are often required.

### SUMMARY

The present disclosure provides a battery cell tray, a battery module, and a battery pack, aiming to address the technical problems of existing metal trays, including excessive weight, low toughness, and inadequate insulation performance.

The present disclosure applies the following technical solutions to realize the above objects.

In a first aspect, examples of the present disclosure provide a cell tray including a tray body and a reinforcement part provided on the tray body. The tray body is provided with a plurality of cell positioning members to fix positions of a plurality of cells. The reinforcement part is disposed in an offset manner with the plurality of cell positioning members. The tray body and the reinforcement part are both made of a fully plastic product.

In a second aspect, examples of the present disclosure provide a battery module, including a cell and the cell tray as described above, and the cell is positioned and fixed at the cell positioning member.

In a third aspect, examples of the present disclosure provide a battery pack including the battery module as described above.

### BENEFICIAL EFFECTS

In the cell tray, battery module, and battery pack provided in some examples of the present disclosure, the tray body of the cell tray is made of fully plastic materials product to reduce weight of the tray and enhance toughness of the tray. At the same time, the reinforcement part is also made of fully plastic materials to enhance support strength of the cell tray without significantly increasing the weight of the tray.

### BRIEF DESCRIPTION OF THE DRAWINGS

FIG. 1 is a schematic structural diagram of a cell tray provided by some examples of the present disclosure.
FIG. 2 is a structural diagram of another perspective of FIG. 1.
FIG. 3 is a bottom view of the cell tray provided by some examples of the present disclosure.
FIG. 4 is a schematic structural diagram of a bracket of the cell tray provided by some examples of the present disclosure.
FIG. 5 is a schematic structural diagram of a bottom of the bracket of the cell tray provided by some examples of the present disclosure.
FIG. 6 is a top view of the bracket of the cell tray provided by some examples of the present disclosure.
FIG. 7 is a schematic cross-sectional view of the bracket along line A-A in FIG. 6.
FIG. 8 is a schematic cross-sectional view of the bracket along line B-B in FIG. 6.

Reference sign description:
01, cell tray; 02, tray body; 03, reinforcement part; 04, cell positioning member; 05, connection hole;
1-1, base plate; 1-04, fixing ring; 1-2, side plate; 1-21, second connection convex rib; 1-31, first reinforcement rib; 1-32, second reinforcement rib; 1-33, third reinforcement rib; 1-4, support ring; 1-40, avoidance part; 1-41, glue passage; 1-5, annular convex edge; 1-6, flange; 1-61, locking hole; 1-62, reinforcement broad rib; 1-63, fourth reinforcement rib; 1-7, steel ring; 1-8, limiting protrusion; 1-81, arc surface; 1-82, V-shaped groove; 1-9, first connection convex rib; 1-91, annular groove;
2-02, bracket; 2-1, frame body; 2-11, positioning boss; 2-12, glue storage groove; 2-13, pressure relief hole; 2-14, convex column; 2-15, convex structure; 2-151, first groove; 2-152, convex rib; 2-16, groove structure; 2-17, annular convex edge; 2-18, connection block; 2-19, reinforcement convex ribs; 2-2, flange nut; 2-3, sealing ring; and 2-4, foam pad.

### DETAILED DESCRIPTION

In the description of the present disclosure, it should be noted that the orientation or position relationships indicated by the terms "up", "down", "front", "back", "left", "right", "vertical", "horizontal", "top", "bottom", "inside", "outer", etc., are based on the orientation or position relationships shown in the accompanying drawings, and are only for the convenience of describing the present disclosure and simplifying the description, rather than indicating or implying that a device or element referred to must have a specific orientation or must be constructed and operated in a specific orientation, and therefore cannot be understood as a limitation of the present disclosure.

Some examples of the present disclosure provide a cell tray 01, including a tray body 02 and a reinforcement part 03 provided on the tray body 02. The tray body 02 is provided with a plurality of cell positioning members 04, which are configured to fix positions of cells (not shown in the figure). The reinforcement part 03 and the plurality of cell positioning members 04 are disposed in an offset manner on the tray body 02. The tray body 02 adopts fully plastic materials to reduce the weight of the tray and enhance the toughness of the tray. The reinforcement part 03 also adopts fully plastic materials to enhance the support strength of the cell tray 01 while not excessively increasing the weight of the tray. The tray body 02 is further provided with at least one connection hole 05, which is configured to connect other components in the battery pack, such as a bottom guard plate, etc.

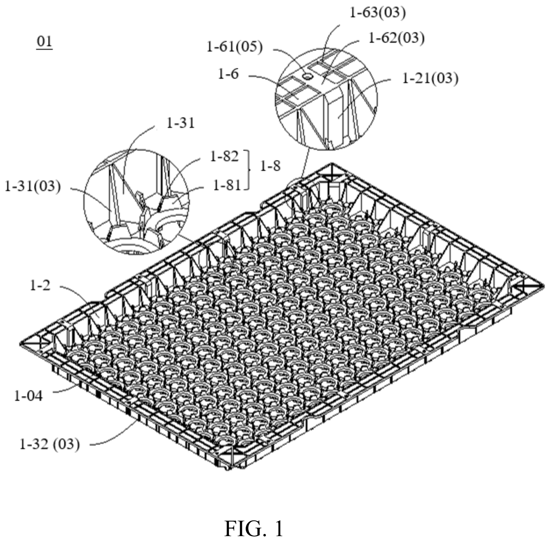

In some examples of the present disclosure, referring to FIGS. 1-3, the cell tray 01 includes a combination of base plates with side plates. That is, the tray body 02 of the cell tray 01 includes a base plate 1-1 and side plates 1-2, and the side plates 1-2 are arranged around the periphery of the base plate 1-1.

The base plate 1-1 is integrally formed, and the cell positioning members 04 are provided on the base plates 1-1. Each cell positioning member 04 includes a fixing ring 1-04. A plurality of fixing rings 1-04 are arranged in an array and are connected to each other to form a rectangular-shaped base plate 1-1 that acts as a support plate. That is, the cell tray 01 is composed of the plurality of fixing rings 1-04 and the side plates 1-2. The side plates 1-2 are arranged vertically and are respectively arranged around the periphery of the plurality of fixing rings 1-04 to form a tray for placing the cells. Each cell positioning member 04 further includes a limiting protrusion 1-8 provided on a top of a connection part between adjacent fixing rings 1-04. The limiting protrusion 1-8 includes an arc surface 1-81 configured to be fitted with an outer side wall of a corresponding cell. A bottom of the cell abuts against an upper end surface of one of the adjacent fixing rings 1-04, so that the fixing ring 1-04 can expose a pressure relief valve of the cell. The fixing ring 1-04 and the limiting protrusion 1-8 together serve as a positioning part of the cell positioning member 04 to fix a position of the cell.

In some examples, two adjacent rows of fixing rings 1-04 are arranged in an offset manner, to form a triangular structure between three adjacent fixing rings 1-04. Each fixing ring 1-04 is connected to six adjacent fixing rings 1-04. Six limit protrusions 1-8 are respectively provided at connection parts between the fixing ring 1-04 and its six adjacent fixing rings 1-04. The six limiting protrusions 1-8 and the fixing ring 1-04 are configured to fix a position of a single cell. A side wall of the cell is clamped by the limiting protrusions 1-8, and a bottom of the cell abuts against an upper end surface of the fixing ring 1-04. In this way, the limiting protrusions 1-8 and the fixing ring 1-04 can have a positioning and pre-fixation effect on the cell, ensuring accurate installation of the cell, and facilitating automatic placement of the cell. Additionally, since the fixing ring 1-04 allows the pressure relief valve of the cell to be exposed, the fixing ring 1-04 enables the pressure relief valve to open when the internal pressure becomes too high. This design allows the excess pressure to escape from a battery module through the fixing ring 1-04, preventing explosions and further ensuring user safety.

In some examples, the plurality of fixing rings 1-04 and the side plates 1-2 are made of plastic and are integrally formed by an injection moulding process.

In some examples, the cell tray 01 and several cells may be fixedly connected by structural adhesive (also referred to as structural glue). Specifically, during assembly, firstly, the cells are placed in the cell tray 01 and pre-fixed by the plurality of limiting protrusions 1-8; then, the structural adhesive is poured into the plastic tray and flows into an avoidance part 1-40 surrounded by three adjacent fixing rings 1-04, further fixing three adjacent cells.

In some examples, the avoidance part 1-40 is a triangular structure, each triangular structure is filled with the structural adhesive, so that the structural adhesive can fix all the cells to the plastic tray. In addition, the triangular structure is conducive to shortening a bonding path of the structural adhesive, thereby increasing a fixing strength of the cells.

Please refer to FIG. 1, in some examples, the limiting protrusion 1-8 is a trapezoidal structure, and a V-shaped groove 1-82 is provided on a side end surface of the limiting protrusion 1-8 that is not fitted to the cell. By setting the limiting protrusion 1-8 into a trapezoidal structure, a bonding area of a top of the limiting protrusion 1-8 can be increased without changing a bottom limit part of the limiting protrusion 1-8, thereby improving the strength of the grouped cells and realizing a good fixing effect. Additionally, during a demoulding process of injection moulding, the limiting protrusion 1-8 with a trapezoidal cross-section is more easily released from a mould and ensures a pleasing product appearance. In addition, the V-shaped grooves 1-82 extends the longest flowing path of the structural adhesive, ensuring that the structural adhesive adequately fills a gap between the cells, increasing a bonding area between the structural adhesive and the limiting protrusion 1-8, and improving the fixing strength.

Please refer to FIGS. 1-3, in some examples, the reinforcement part 03 includes a plurality of first reinforcement ribs 1-31 and a plurality of second reinforcement ribs 1-32 to ensure that the cell tray 01 made of plastic material has a good support strength. The plurality of first reinforcement ribs 1-31 are provided between inner side walls of the side plates 1-2 and several adjacent fixing rings 1-04, and the plurality of second reinforcement ribs 1-32 are provided on outer side walls of the side plates 1-2. In some examples, the first reinforcement rib 1-31 has a triangular cross-section, and is connected to the inner side wall of the side plate 1-2 and an adjacent limiting protrusion 1-8. The second reinforcement ribs 1-32 are a plurality of vertical reinforcement ribs arranged at intervals. Therefore, by respectively providing the plurality of first reinforcement ribs 1-31 and the plurality of second reinforcement ribs 1-32 on the inner and outer walls of the side plates 1-2, the support strength of the cell tray 01 is greatly improved, effectively resolving the issue of inadequate plastic strength.

In some examples, the bottom of the plurality of fixing rings 1-04 are further provided with support rings 1-4 at positions corresponding to the avoidance parts 1-40, each support ring 1-4 is similar to a "pagoda head structure". A glue passage 1-41 is provided in a center of each support ring 1-4 and is in communication with a respective avoidance part 1-40. Thus, the glue flowing into the avoidance part 1-40 will enter the glue passage 1-41 and flow out from the bottom of the glue passage 1-41, to be used for fixing the plastic tray and a bottom plate of a box provided on the bottom of the plastic tray.

In some examples, the bottom of each fixing ring 1-04 is further provided with an annular convex edge 1-5. The reinforcement part 03 further includes third reinforcement ribs 1-33, and each third reinforcement rib 1-33 is arranged between a corresponding annular convex edge 1-5 and the support ring 1-4 arranged on the outer periphery of the annular convex edge 1-5. The third reinforcement rib 1-33 has a triangular cross-section and is respectively connected to the support ring 1-4 and the annular convex edge 1-5. In addition, the reinforcement part 03 further includes first connection convex ribs 1-9, each first connection convex rib 1-9 is provided at a bottom of a connection part between two adjacent fixing rings 1-04. Two ends of the first connection convex rib 1-9 are respectively connected to the two adjacent support rings 1-4. Several supporting rings 1-4, which are arranged on the outer periphery of the annular convex 1-5, are connected to each other via the first connection convex ribs 1-9 to form a convex ring structure, thereby greatly improving a connection strength between adjacent support rings 1-4.

At the same time, since the convex ring structure and the annular convex edge 1-5 are protruding from the bottom of the fixing ring 1-04, the bottom of the fixing ring 1-04, the convex ring structure, and the annular convex edge 1-5 are enclosed to form an annular groove 1-91, and the third reinforcement ribs 1-33 are arranged on the annular groove 1-91 at intervals in a circumferential direction. Therefore, when the cell is fixed on the plastic tray and integrated into the battery pack, a pressure relief space will be formed between the bottom of the plastic tray and the bottom plate of the box, and the annular grooves 1-91 can further increase the pressure relief space to facilitate the cell to relieve pressure.

Therefore, by providing the annular convex edges 1-5, the support rings 1-4, third reinforcement rib 1-33, and first connection convex rib 1-9 at the bottom of the plurality of fixing rings 1-04, the support strength of the bottom of the plastic tray is enhanced, thereby better supporting the cells, and further improving the strength and stability of the tray.

In some examples, the first reinforcement ribs 1-31, the second reinforcement ribs 1-32, the support rings 1-4, the third reinforcement ribs 1-33, the first connection convex ribs 1-9, and the annular convex edge 1-5 are all integrally moulded onto the battery core tray 01.

In some examples, an upper end of the side plates 1-2 extends horizontally outward and forms a flange 1-6, and the connection hole 05 includes a plurality of locking holes 1-61 spaced apart in a length direction of the flange 1-6, and each locking hole 1-61 are embedded with a steel ring 1-7. Thus, by inlaying the steel ring 1-7 in the locking hole 1-61 of the flange 1-6, when a bolt is locked, the bolt may be prevented from crushing the flange 1-6 of the tray or bolt loosening failure may be prevented. In addition, the reinforcement part 03 further includes a reinforcement wide rib 1-62 provided at a position of the locking hole 1-61 on an upper end surface of the flange 1-6. The reinforcement part 03 further includes a second connection convex rib 1-21 provided on the inner side wall of the side plate 1-2 and connected to the reinforcement wide rib 1-62. Thus, by providing the reinforcement wide rib 1-62 and the second connection convex rib 1-21, the force can be transmitted to a cell support surface of the cell tray 01, making an overall structure more stable. In addition, the reinforcement part 03 further includes a plurality of fourth reinforcement ribs 1-63 protruding from an upper end surface of the flange 1-6. The fourth reinforcement ribs 1-63 are transverse and vertical ribs that are set perpendicularly to each other and are connected to the reinforcement wide ribs 1-62. This further ensures the supporting strength of the flange 1-6.

### Examples of FIGS. 1-3

The cell tray is made of plastic material, which provides electrical insulation and features low density as well as lightweight properties. In addition, by providing the first reinforcement ribs 1-31 and second reinforcement ribs 1-32 on the inner and outer walls of the side plate 1-2, the support strength of the cell tray is greatly improved, resolving the problem of insufficient plastic strength.

In addition, by providing the annular convex edges 1-5, the support rings 1-4, the third reinforcement ribs 1-33, and the first connection ribs 1-9 at the bottom of the plurality of fixing rings 1-04, the support strength of the bottom of the cell tray is enhanced to support the cells, improving the strength and stability of the cell tray.

In addition, by inlaying the steel ring 1-7 in the locking hole 1-61 of the flange 1-6, when the bolt is locked, the bolt may be prevented from crushing the flange of the tray or bolt loosening failure is prevented. By providing the reinforcement wide rib 1-62 at the locking hole 1-61 of the flange 1-6, the strength of the locking hole 1-61 can be increased. By providing the second connection convex rib 1-21 on the inner wall of the side plate 1-2, the force can be transmitted to the cell support surface of the cell tray, making the overall structure more stable.

In addition, by providing the limiting protrusions 1-8 at the connection parts between the adjacent fixing rings 1-04, the cell may be fixed and assembled, the assembly accuracy is improved, and a spacing between the cells is ensured to prevent the pressure relief valve at the bottom of the cell from being blocked. In the event of thermal runaway in the cell, high-temperature substances or gas can be discharged through the fixing rings 1-04 to achieve smooth pressure relief.

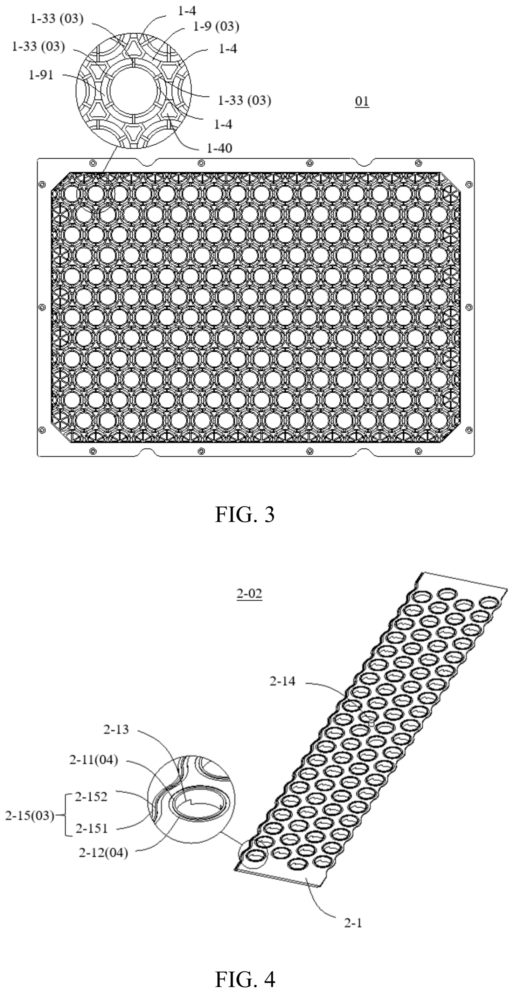

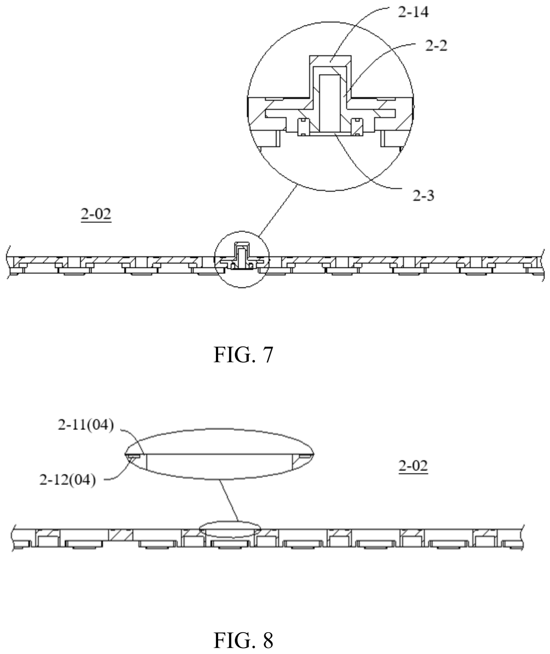

In some examples of the present disclosure, referring to FIGS. 4-8, the cell tray 01 adopts a multiple bracket combination mode, that is, the tray body 02 of the cell tray 01 includes at least two brackets 2-02 that are detachably coupled together, on which the cell positioning member 04 and the reinforcement part 03 are provided.

Each bracket 2-02 includes a frame body 2-1 made of plastic material. An upper end surface of the frame body 2-1 is provided with the cell positioning members 04 in an array, and positioning bosses 2-11 are used as the cell positioning members 04 to fix a position of the cell. In some examples, the positioning boss 2-11 is an annular convex, and a bottom of the cell is provided with steps (not shown in the figure) that cooperate with the annular convex, and the rapid positioning and assembly of the cell can be achieved through the coordination between the annular convex and the steps. In addition, the upper end surface of the frame body 2-1 is further provided with glue storage grooves 2-12 in an array, and the glue storage grooves 2-12 have a one-to-one correspondence with the positioning bosses 2-11. The glue storage groove 2-12 is an annular groove, is arranged around an outer periphery of and is in communication with a corresponding positioning boss 2-11, so that when the cell is placed at the positioning boss 2-11, the bottom of the cell can come into contact with the glue inside the glue storage groove 2-12. The positioning boss 2-11 and the glue storage groove 2-12 form the positioning part of the cell positioning member 04 for fix the position of the cell.

Therefore, when the plurality of cells need to be assembled on the frame body 2-1, firstly, the structural adhesive is coated into the glue storage grooves 2-12, then, the bottom of the cell is aligned with and is inserted in the positioning boss 2-11, so that the bottom of the cell contacts the glue in the glue storage grooves 2-12. After the glue solidifies, the cell is stuck to the frame body 2-1.

In some examples, the plurality of positioning bosses 2-11 and the glue storage tank 2-12 are integrally moulded onto the upper end surface of the frame body 2-1.

Referring to FIG. 4, in some examples, a plurality of pressure relief holes 2-13, having a one-to-one correspondence to the plurality of cells, are further provided on the frame body 2-1. In some examples, the pressure relief hole 2-13 is a circular through-hole, and the pressure relief hole 2-13 is connected to a pressure relief valve (not shown) at the bottom of the corresponding cell. A diameter of the pressure relief hole 2-13 is *a,* a diameter of the pressure relief valve is *b,* and *a>b,* and a difference *a-b* between *a* and *b* represents a requirement for the position of the cell. Therefore, in the event of thermal runaway in the cell, the pressure can be relieved smoothly through the pressure relief holes 2-13, thereby improving the safety of the battery.

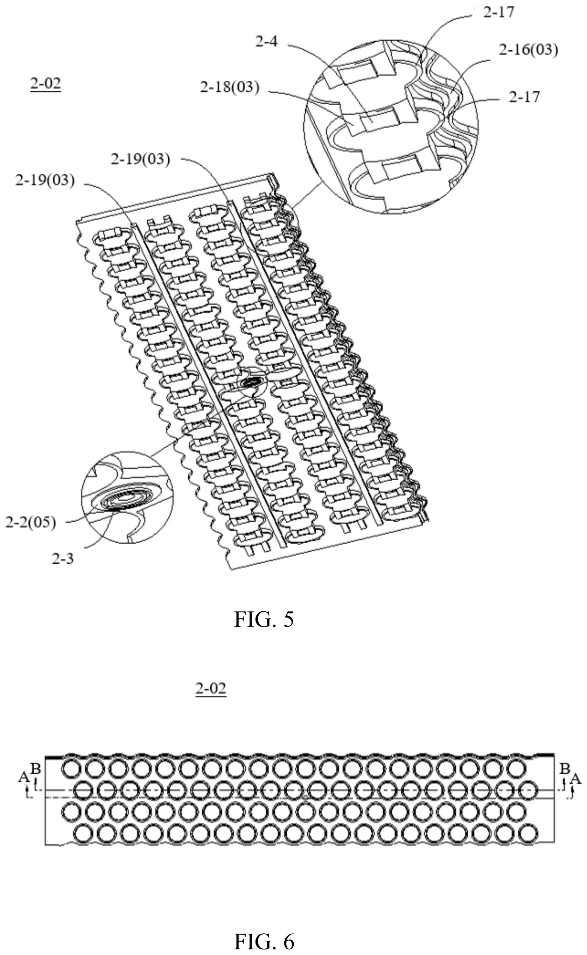

Referring to FIGS. 4 and 5, the frame body 2-1 is rectangular and has two long sides opposite to each other and two short sides opposite to each other. One of the two long sides is provided with a wavy convex structure 2-15, and the other one of the two long sides is provided with a wavy concave structure 2-16 that is interlocking and cooperating with the convex structure 2-15. Specifically, the convex structure 2-15 includes a first groove 1-151 opened on an upper end surface of one of the two long sides and a convex rib 1-152 protruding from the first groove 1-151. The convex rib 1-152 is arranged in a wavy shape. The concave structure 2-16 includes a second groove opened on a lower end surface of the other one of the two long sides, and the second groove is a step groove and is also arranged in a wavy shape.

Therefore, through the interlocking connection between the convex structure 2-15 and the concave structure 2-16, multiple frame bodies 2-1 can be spliced, thus being applicable to different usage scenarios. At the same time, through the interlocking connection between the convex structure 2-15 and the concave structure 2-16, the reinforcing part 03 is formed, thereby increasing the supporting strength of the cell tray 01. In addition, by configuring the convex ribs 1-152 and the second groove in a wavy shape, the interlocked convex ribs 1-152 and second groove have higher stability, thereby avoiding a shift between the frame bodies 2-1.

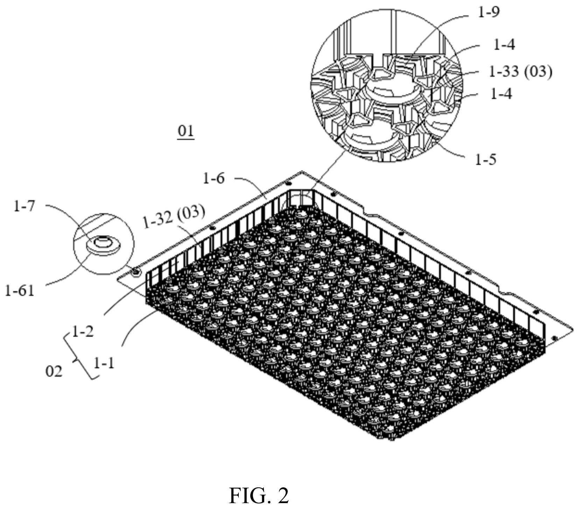

Referring to FIGS. 2 and 4, in some examples, the lower end surface of the frame body 2-1 is provided with a plurality of annular convex edges 2-17 arranged in an array at the positions corresponding to the pressure relief holes 2-13. The reinforcement part 03 further includes connection blocks 2-18. Two adjacent annular convex edges 2-17 arranged along a length direction of the frame body 2-1 are connected to each other through a corresponding connection block 2-18. Each connection block 2-18 is provided with a cavity, and a foam pad 2-4 is adhered inside the cavity. Additionally, in the center of the lower end surface of the frame body 2-1, a flange nut 2-2 is integrally moulded as the connection hole 05. A bottom of the flange nut 2-2 is embedded with a sealing glue ring 2-3.

Thus, by integrally moulding the flange nut 2-2 in the middle of the frame body 2-1, it is possible to lock the frame body 2-1 with other structural components through a bolt. A flange surface of the flange nut 2-2 can ensure the injection adhesion force, which can increase the supporting strength when the frame body 2-1 is long. By setting the sealing glue ring 2-3 at the bottom of the flange nut 2-2, a sealing effect is achieved. Moreover, in the event of thermal runaway in the cell and gas emitting, the bolt locking can provide a certain holding effect on the frame body 2-1, thereby reducing the impact of the gas on other structural components (such as the bottom guard plate).

Additionally, by adhering the foam pad 2-4 in the cavity, when the frame body 2-1 is locked with other structural components (such as the bottom guard plate), the foam pad 2-4 can play a buffering and shock-absorbing role, and at the same time reduce the friction between the frame body 2-1 and other structural components. Moreover, by opening the cavity to place the foam pad 2-4, it is not only possible to quickly assemble the foam pad 2-4, but also to meet the requirements of buffering and shock absorption while reducing a distance between the frame body 2-1 and a bottom structure, thereby reducing an overall height of the battery pack.

In some examples, the middle of the upper surface of the frame body 2-1 is further integrally moulded with a convex column 2-14. The top of the flange nut 2-2 extends into an interior of the convex column 2-14.

Referring to FIG. 5, in some examples, the reinforcement part 03 further includes reinforcement convex ribs 2-19 arranged on the lower end surface of the frame body 2-1 and spaced apart in the width direction of the frame body 2-1, and the reinforcement convex ribs 2-19 extend in the length direction of the frame body 2-1. Thus, by providing the plurality of reinforcement convex ribs 2-19, the support strength of the plastic bracket can be improved.

In some examples, the plurality of annular convex edges 2-17, connection blocks 2-18, and reinforcement convex ribs 2-19 are integrally moulded on the lower end surface of the frame body 2-1.

### Examples of FIGS. 4-8.

By arranging the positioning boss 2-11 on the frame body 2-1 and arranging corresponding steps at the position of the cell that are compatible with the positioning boss, the position of the cell can be fixed, preventing the cell from shifting. By arranging the glue storage groove 2-12 on the frame body 2-1 and coating the structural adhesive in the glue storage groove 2-12 before placing the cell, the structural adhesive is solidified after the cell is placed, adhering the cell to the plastic frame body with strong adhesion, thereby ensuring the overall structural strength.

Additionally, by setting the pressure relief hole 2-13 at the position corresponding to the cell on the frame body 2-1, when the cell undergoes thermal runaway, the pressure relief holes 2-13 can be used to smoothly release the pressure, thereby improving the safety of the battery.

Additionally, the convex structure 2-15 and the concave structure 2-16 are arranged on the two long sides of each frame body 2-1 respectively, and multiple plastic frame bodies are spliced through interlocking connection between the convex structure 2-15 and the concave structure 2-16, thereby being applicable to different usage scenarios.

Additionally, by integrally moulding the flange nut 2-2 in the middle of the frame body 2-1, the flange nut 2-2 can be locked with other structural components (such as the bottom guard plate) through a bolt. A flange surface of the flange nut 2-2 can ensure the injection moulding adhesion force, which can play a role in increasing the supporting strength when the plastic frame body is quite long. By setting a sealing glue ring 2-3 at the bottom of the flange nut 2-2, a sealing effect is achieved. Additionally, when the cell undergoes thermal runaway and emits gas, the bolt locking can play a certain holding effect, thereby reducing the impact on other structural components.

Additionally, by arranging the annular convex edges 2-17 on the lower end surface of the frame body 2-1, and connecting two adjacent annular convex edges 2-17 in one horizontal row through a connection block 2-18, the overall strength of the frame body 2-1 can be improved. By placing the foam pad 2-4 in the connection block 2-18, when the frame body 2-1 is locked with other structural components (such as the bottom guard plate), the foam 2-4 can play a buffering and shock-absorbing role, and at the same time reduces the friction between the frame body 2-1 and other structural components, reducing the NVH (Noise, Vibration, Harshness) problems of the battery pack.

In addition, some other examples of the present disclosure further provide a battery module, including the above-mentioned cell tray 01 and a plurality of cells (not shown in the figure). The plurality of cells are fixed in the cell positioning member 04 of the cell tray 01. The cell tray 01 is not only lightweight and highly resilient, but also has excellent insulation properties.

In addition, some other examples of the present disclosure further provide a battery pack, including the above-mentioned battery module.

## Claims

1. A cell tray (01), comprising:
a tray body (02) provided with a plurality of cell positioning members (04) to fix positions of a plurality of cells; and
a reinforcement part (03) provided on the tray body (02) and disposed in an offset manner with the plurality of cell positioning members (04);
wherein the tray body (02) and the reinforcement part (03) are both made of fully plastic materials.

2. The cell tray according to claim 1, wherein the plurality of cell positioning members (04) are arranged on the tray body (02) in an array,
each of the plurality of cell positioning members (04) comprises a positioning part and a pressure relief hole, the positioning part is configured to fix a position of a respective one of the plurality of cells, and the pressure relief hole is connected to a pressure relief valve at a bottom of each of the plurality of cell.

3. The cell tray according to claim 2, wherein the tray body (02) comprises a base plate (1-1) and side plates (1-2) arranged around an outer periphery of the base plate (1-1), and the plurality of cell positioning members (04) are provided on the base plate (1-1).

4. The cell tray according to claim 3, wherein the positioning part of each of the plurality of cell positioning members (04) comprises a fixing ring (1-04), so that the plurality of battery cell positioning members (04) comprise a plurality of fixing rings (1-04), and the pressure relief hole corresponds to a hole inside the fixing ring (1-04);
adjacent ones of the plurality of fixing rings (1-04) are connected to each other;
two adjacent rows of the plurality of fixing rings (1-04) are arranged in an offset manner, and three adjacent ones of the plurality of fixing rings (1-04) are enclosed to form an avoidance part (1-40), so that a plurality of avoidance parts (1-40) are formed by the plurality of fixing rings (1-04), and
a bottom of the plurality of fixing rings (1-04) is provided with a plurality of support rings (1-4) at positions corresponding to the plurality of avoidance parts (1-40).

5. The cell tray according to claim 4, wherein a glue passage (1-41) is provided in a center of each support ring (1-4) and is in communication with a respective one of the avoidance parts (1-40).

6. The cell tray according to claim 4, wherein the positioning part further comprises a limiting protrusion (1-8) provided on a top of a connection part between adjacent ones of the fixing rings (1-1), the limiting protrusion (1-8) comprises an arc surface (1-81), the arc surface (1-81) is fitted with an outer side wall of a respective one of the plurality of cells, and a bottom of the cell abuts against an upper end surface of one of the adjacent fixing rings (1-1); and
the limiting protrusion (1-8) is a trapezoidal structure, and a V-shaped groove (1-82) is provided on a side end surface of the limiting protrusion (1-8) that is not fitted with the battery cell.

7. The cell tray according to claim 3, wherein the reinforcement part (03) comprises a first reinforcement rib (1-31) and a second reinforcement rib (1-32), the first reinforcement rib (1-31) is provided between an inner side wall of one of the side plates (1-2) and a respective one of the plurality of cell positioning members (04) adjacent to the side plate (1-2), and the second reinforcement rib (1-32) is provided on an outer side wall of one of the side plates (1-2).

8. The cell tray according to claim 3 or 7, wherein a bottom of the fixing ring (1-04) is further provided with an annular convex edge (1-5), and the reinforcement part (03) further comprises third reinforcement ribs (1-33), and the third reinforcement ribs (1-33) are disposed between the annular convex edge (1-5) and the plurality of support rings (1-4) arranged around an outer periphery of the annular convex edge (1-5).

9. The cell tray according to claim 8, wherein the reinforcement part (03) further comprises first connection convex ribs (1-9), each first connection convex rib (1-9) is provided at a bottom of a connection part between two adjacent ones of the plurality of fixing rings (1-1), and two ends of the first connection convex rib (1-9) are respectively connected to two adjacent ones of the plurality of support rings (1-4);
the plurality of support rings (1-4) arranged on an outer periphery of each annular convex ring (1-5) are connected by the first connection convex ribs (1-9) to form a convex ring structure; and
a bottom of the fixing ring (1-04), the convex ring structure, and the annular convex ring (1-5) are enclosed to form an annular groove (1-91), and the third reinforcement ribs (1-33) are arranged on the annular groove at intervals in a circumferential direction.

10. The cell tray according to claim 3, wherein an upper end of the side plates (1-2) extends outwardly to form a flange (1-6), the flange (1-6) is provided with locking holes (1-61) spaced apart from each other, and each locking hole (1-61) is embedded with a steel ring (1-7).

11. The cell tray according to claim 10, wherein the reinforcement part (03) comprises:
reinforcement wide ribs (1-62) provided at positions of the locking holes on an upper end surface of the flange,
second connection convex ribs (1-21) provided on inner side walls of respective ones of the side plates (1-2) and respectively connected to the reinforcement wide ribs (1-62), and
a plurality of fourth reinforcement ribs (1-63) provided on the upper end surface of the flange (1-6).

12. The cell tray according to claim 2, wherein the tray body (02) comprises at least two brackets that are detachably coupled together (2-02), each bracket (2-02) comprises a frame body (2-1), so that the tray body (02) comprises at least two frame bodies (2-1), and
the cell positioning members (04) and the reinforcement part (03) are provided on the frame body (2-1).

13. The cell tray according to claim 12, wherein each bracket (2-02) is further provided with positioning bosses (2-11) on an upper end face of the frame body (2-1), and glue storage grooves (2-12) on the upper end face of the frame body and having one-to-one correspondence with the positioning bosses (2-11), and
each glue storage groove (2-12) is arranged around an outer periphery of and in communication with a respective one of the positioning bosses (2-11), to constitute the positioning part of the cell positioning member (04).

14. The cell tray according to claim 12, wherein the frame body (2-1) is rectangular and has two long sides opposite to each other and two short sides opposite to each other,
one of the two long sides is provided with a wavy convex structure (2-15) and the other one of the two long sides is provided with a wavy concave structure (2-16), and the wavy convex structure (2-15) and the wavy concave structure (2-16) are configured to interlock with each other; and
in two adjacent ones of the at least two frame bodies (2-1), the wavy convex structure (2-15) and the wavy concave structure (2-16) are spliced together to form a part of the reinforcement part (03).

15. The cell tray according to claim 14, wherein the wavy convex structure (2-15) comprises a first groove (2-151) opened on an upper end surface of one of the two long sides and a convex rib (2-152) protruding from the first groove (2-151), and the convex rib (2-152) is arranged in a wavy shape; and
the groove structure (2-16) comprises a second groove opened on a lower end face of the other one of the two long sides, and the second groove is a step groove and is arranged in a wavy shape.

16. The cell tray according to claim 12, wherein a diameter of the pressure relief hole (2-13) is *a,* a diameter of the pressure relief valve is *b,* where *a>b,* and a difference *a-b* between *a* and *b* represents a requirement for a position tolerance of the cell;
a lower end surface of the frame body (2-1) is provided with annular convex edges (2-17) arranged in an array at positions corresponding to the pressure relief holes (2-13),
the reinforcement part (03) further comprises connection blocks (2-18), and two adjacent ones of the annular convex edges (2-17) arranged along a length direction of the frame body (2-1) are connected by a respective one of the connection blocks (2-18); and
each connection block (2-18) is provided with a cavity, and a foam pad (2-4) is provided in the cavity.

17. The cell tray according to claim 12, wherein the reinforcement part (03) comprises reinforcement convex ribs (2-19) arranged at the lower end surface of the frame body (2-1) and spaced apart in a width direction of the frame body (2-1), and the reinforcement convex ribs (2-19) extend in a length direction of the frame body (2-1).

18. The cell tray according to claim 12, wherein the lower end surface of the frame body (2-1) is further integrally moulded with a flange nut (2-2), and a bottom of the flange nut (2-2) is embedded with a sealing ring (2-3); and
an upper end surface of the frame body (2-1) is further integrally formed with a convex column (2-14) at a position corresponding to the flange nut (2-2), and a top of the flange nut (2-2) extends into an interior of the convex column (2-14).

19. A battery module, comprising a plurality of cells and the cell tray as claimed in any one of claims 1-18,
each of the plurality of cells is positioned and fixed at a respective one of the cell positioning members (04).

20. A battery pack, comprising the battery module as claimed in claim 19.
